Europäisches Patentamt

European Patent Office

Office européen des brevets

(19)

(11) Veröffentlichungsnummer: **0 127 652**
**B1**

(12) **EUROPÄISCHE PATENTSCHRIFT**

(45) Veröffentlichungstag der Patentschrift:
**21.09.88**

(21) Anmeldenummer: **83903818.9**

(22) Anmeldetag: **30.11.83**

(86) Internationale Anmeldenummer:
**PCT/HU 83/00057**

(87) Internationale Veröffentlichungsnummer:
**WO 84/02115 (07.06.84 Gazette 84/14)**

(51) Int. Cl.⁴: **B 64 C 31/02**

(54) **FLUGZEUGKONSTRUKTION MIT START UND LANDUNG AUF DEN FÜSSEN DES PILOTEN.**

(30) Priorität: **01.12.82 HU 385382**

(43) Veröffentlichungstag der Anmeldung:
**12.12.84 Patentblatt 84/50**

(45) Bekanntmachung des Hinweises auf die Patenterteilung:
**21.09.88 Patentblatt 88/38**

(84) Benannte Vertragsstaaten:
**AT BE CH DE FR GB LI LU NL SE**

(56) Entgegenhaltungen:
**GB-A-1 578 526**
**GB-A-2 050 262**
**US-A-3 273 828**
**US-A-3 279 723**
**US-A-3 361 388**
**US-A-4 336 914**

(73) Patentinhaber: **RUBIK, Ernö, Bimbò ut. 210, H-1026, Budapest, II (HU)**

(72) Erfinder: **RUBIK, Ernö, Bimbò ut. 210, H-1026, Budapest, II (HU)**

(74) Vertreter: **Springstubbe, Wolf, Patentanwalt Dipl.-Ing. Wolf Springstubbe Parkstrasse 15, D-8035 Gauting 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung hat eine Flugzeugkonstruktion zum Inhalt, die Start und Landung unter Zuhilfenahme der Füße des Piloten ermöglicht; die erfindungsgemäße Flugzeugkonstruktion kann als eine Kategorie zwischen den Flugzeugkonstruktionen des Drachencharakters und den Leichtflugzeugen betrachtet werden.

Die Flugzeugkonstruktion des Drachentyps - auch unter dem Namen Hängesegler, Rogallo oder einfach Drache bekannt - ist ein weitverbreitetes und bevorzugtes Sportmittel geworden.

Eine der grundsätzlichen Eigenschaften dieser Flugzeugkonstruktion besteht darin, daß Start und Landung mit Hilfe der Füße des Piloten möglich sind. Das Leergewicht einer derartigen Flugzeugkonstruktion liegt bei nicht mehr als 30 bis 35 kg. Sie kann auf einfache Weise zerlegt und zusammengebaut werden; der Transport im zerlegten Zustand ist leicht zu bewerkstelligen. Eine wesentliche Eigenschaft der Flugzeugkonstruktionen des Drachencharakters besteht darin, dass die Steuerung im Prinzip mit Hilfe von durch Änderungen der Körperposition des Piloten bewirkten Verlagerungen des gemeinsamen Massenzentrums von Flugzeugkonstruktion und Pilot geschieht, wobei der Angriffspunkt der Resultierenden der aerodynamischen Kräfte (Auftriebs- und Luftwiderstandskräfte) unverändert bleibt.

Das Leichtflugzeug stellt eine weitere, ebenfalls weitgehend verbreitete Flugzeugkonstruktion dar. Bei dieser Flugzeugkonstruktion sind Steuerorgane an der Maschine vorgesehen, mit deren Hilfe die Konstruktion aerodynamisch gesteuert werden kann: Die Steuerung geschieht im Prinzip mit Hilfe von durch Ruder, Klappen und/oder Verwindungselementen bewirkten Veränderungen von Flügelkonturen und damit der jeweils wirksamen aerodynamischen Kräfte, wobei die Position der Flügel als solche und damit auch die Position des Masseschwerpunkts des Flugzeugs als Ganzes (einschliesslich des Piloten) relativ zum Flugzeugkörper unverändert bleibt.

So ist beispielsweise (aus der US-A-3 361 388) ein motorgetriebenes Leichtflugzeug mit zwei einen Delta-Flügel bildenden, während des Fluges durch eine Querstrebe zwischen Kiel und Flügelkantenstäben in ausgespannter Position gehaltenen und insoweit nicht bewegbaren flexiblen Tragflächen bekannt, dessen Pilot, der sich in einem unter dem Tragflügel gelenkig aufgehängten Sitz befindet, das Leichtflugzeug mit Hilfe eines vor ihm hängenden Steuerknüppels steuert, wobei bei einer Seitwärtsbewegung des Steuerknüppels zwei die zwei Flügelkantenstäbe fortsetzende Verwindungsstäbe nach oben bzw. unten abgewinkelt werden, so daß sich unsymmetrische Flügelkonturen und damit zu einer Rollbewegung führende Unterschiede im beiderseitigen Auftrieb ergeben, und wobei bei einer Vorwärts- bzw. Rückwärtsbewegung des Steuerknüppels der Anstellwinkel eines Canard-Flügels verändert wird, so daß sich die Flugzeugneigung ändert.

Das Leergewicht von Leichtflugzeugen ist wesentlich höher als das von Drachenflugzeugen; eine - bestimmungsgemäße - Zerlegung in demselben Maß wie bei zum Drachentyp gehörenden Flugzeugkonstruktionen ist nicht vorgesehen. Nachteilig ist ferner der hohe Zeit- bzw. Platzbedarf bei Zusammenbau, Lagerung und Transport.

Ein wesentlicher Nachteil der bekannten Flugzeugkonstruktionen des Drachentyps besteht darin, daß ihre flugtechnischen Leistungen begrenzt sind und die Erzielung höherer Leistungen - bzw. einer besseren Gleitzahl - insbesondere mit Rücksicht auf die Betriebssicherheit der Flugzeugkonstruktion unmöglich ist. Um eine höhere Leistung erreichen zu können, wäre eine grössere Flügelbreite erforderlich. Ein besonderer Nachteil der zu dem Drachentyp gehörenden Flugzeugkonstruktionen besteht darin, daß den Änderungen der Körperposition des Piloten während des Fluges Grenzen gesetzt sind; dabei ist die Änderung in extremen Fällen mit einer bedeutenden physischen Belastung verbunden. Zusätzlich kann ggf. auch das Fehlen von die Stabilität sicherstellenden Ebenen von Nachteil sein.

Der Erfindung liegt nun die Zielsetzung zugrunde, eine Steuerung von Drachenflugzeugen ohne solche relativ anstrengenden Gewichtsverlagerungen des Piloten zu ermöglichen, zugleich aber auch bei Leichtflugzeugen noch akzeptable, für einfach aufzubauende und wieder zerlegbaren Drachenflugzeuge aber eher unangemessene Klappen- und Verwindungs-Konstruktionen zu vermeiden.

Die Erfindung betrifft eine Flugzeugkonstruktion mit einem vom Piloten betätigbaren, auf die Flügel einwirkenden Mechanismus; diese Flugzeugkonstruktion ist erfindungsgemäß dadurch gekennzeichnet, daß die freitragenden oder mit äußerer Versteifung versehenen Flügel eines Start und Landung unter Zuhilfenahme der Füße des Piloten ermöglichenden Flugzeugs zumindest in der eigenen Ebene bewegbar sind.

Die Erfindung ermöglicht eine Steuerung von Drachenflugzeugen auch ohne durch Gewichtsverlagerungen des Piloten bewirkte Änderungen des gemeinsamen Massezentrums von Flugzeug und Pilot, indem bei unveränderter Position des Piloten innerhalb des Drachenflugzeugs dessen Flügel in ihrer eigenen Ebene bewegt werden, womit - ohne Veränderung der eigentlichen Tragflächen selbst - der Angriffspunkt der Resultierenden der aerodynamischen Kräfte relativ zum Flugzeugkörper verlagert wird.

Bei Anwendung der erfindungsgemäßen Flugzeugkonstruktion können die bei den zu dem Drachentyp gehörenden Flugzeugkonstruktionen auftretenden Nachteile und Mangelhaftigkeiten beinahe in ihrer Gesamtheit beseitigt werden; gleichzeitig besteht die Möglichkeit, die günstigen Eigenschaften derartiger Flugzeugkonstruktionen aufrechterhalten zu können. Gleicherweise weist die erfindungsgemäße Flugzeugkonstruktion einzelne günstige strukturelle Eigenschaften des Leichtflugzeugs auf, ohne daß ungünstige Charakteristiken übernommen wären.

Mit der erfindungsgemäßen Flugzeugkonstruktion wird eine Konstruktion geschaffen, die eine entsprechende Flugsicherheit während des Fluges gewährleistet, gegenüber den bekannten, zu dem Drachentyp gehörenden Flugzeugkonstruktionen eine wesentlich bessere Flugleistung bzw. Gleitzahl erreichen läßt, zugleich aber die Möglichkeit zum Abflug vom Fuß und zur Landung auf dem Fuß des Piloten beibehält.

Beibehalten bleiben auch die bei einem Drachenflugzeug gegebene leichte Zerlegbarkeit und der problemlose Zusammenbau der Flugzeugkonstruktion und auch, daß die Konstruktion ohne Schwierigkeiten und billig transportiert und gelagert werden kann.

Die Erfindung und damit das Mittel zu Erreichung des gesetzten Ziels beruhen auf dem Gedanken, daß eine Steuerung der Flugzeugkonstruktion nicht nur mit Hilfe einer durch Körperverlagerung des Piloten hervorgerufenen Verlagerung des gemeinsamen Massenzentrums von Flugzeugkonstruktion und Pilot (bei unverändertem Angriffspunkt der Resultierenden der aerodynamischen Kräfte (Auftrieb, Luftwiderstand)) möglich ist, sondern daß zur Steuerung der Flugzeugkonstruktion, deren Pilot dabei seine Körperlage beibehalten kann, die beiden Flügel des Flugzeugs zumindest in ihrer eigenen Ebene bewegt werden, so daß (ohne Veränderung der Tragflächen selbst) der Angriffspunkt der aerodynamischen Kräfte am Flugzeugkörper verlagert wird; so werden etwa zum Steigen oder Sinken des Flugzeugs beide Flügel in ihrer Ebene vorwärts oder rückwärts bewegt. Mit einer derartigen Bewegungsmöglichkeit kann dem Piloten eine bequemere Position in der Konstruktion ermöglicht werden, in der die Betätigung des Mechanismus' für den Piloten keine besondere Anstrengung darstellt, nachdem einerseits bei geeigneter Wahl der einzelnen Elemente für die Bewegung des Flügels kein besonderer Kraftaufwand nötig ist und andererseits in einer bequemen Körperhaltung der Kraftaufwand ohnehin leichter vor sich geht.

Die Bewegung des Flügels erfolgt zumindest in seiner eigenen Ebene, wobei aber auch nicht ausgeschlossen ist, daß der bewegte Flügel ggf. auch eine komplexe Bewegung ausführt, die neben der in seiner eigenen Ebene durchgeführten Bewegung gewissermaßen eine Verwindungs- oder andere Bewegungskomponente darstellt; festzuhalten bleibt, daß der Flügel hauptsächlich in seiner eigenen Ebene bewegbar ist.

Dabei kann in zweckmässiger Ausgestaltung der Erfindung der Flügel eine Drehbewegung im Verhältnis zu einer gegenüber der horizontalen Flugrichtung vertikal positionierten Achse oder Zapfen ausführen. Es kann die Erfindung auch dahingehend ausgestaltet sein, daß je ein Flügel nicht in seiner Gesamtheit in Bewegung gesetzt wird, sondern nur ein bei Betrachtung in der Längsrichtung als solcher sichtbarer Teil des Flügels. Bei einer derartigen Konstruktion ist der sich bewegende Teil des Flügels mit der oben erwähnten Achse oder dem Zapfen in einer bewegbaren Weise verbunden.

Bei einer vorteilhaften Ausführung der Erfindung werden die Flügelenden auf an sich bekannter Weise gespaltet. Durch die Spaltung kann der induzierte Widerstand verringert und als Erfolg die Flugleistung erhöht werden. Im allgemeinen werden die Flugeigenschaften der Maschine durch die Spaltung verbessert, der Flugzeugkonstruktion wird eine Stabilität in der Querrichtung geliehen, wodurch die Sicherheit des Fluges erhöht wird.

Eine weitere grundsätzliche strukturelle Eigenschaft der Flugzeugkonstruktion besteht in dem Vorhandensein einer horizontalen Dämpfungsebene. Diese Dämpfungsebene kann vor oder nach dem für den Aufenthalt des Pilots während des Fluges dienenden Raum liegen. Sollte die erwähnte horizontale Dämpfungsebene vor dem Pilotenraum liegen, ist diese so anzuordnen, dass die freie Aussicht des Pilots in dem möglichst geringsten Mass gehindert oder beschränkt sei. Die horizontale Dämpfungsebene sichert die Stabilität der Flugzeugkonstruktion in der Längsrichtung, wodurch die Verwindung des Flügels sich erübrigt.

Eine weitere grundsätzliche strukturelle Charakteristik der erfindungsgemässen Flugzeugkonstruktion besteht in dem Vorhandensein einer vertikalen Dämpfungsebene. Die vertikale Dämpfungsebene dient zur Stabilität des Flugzeuges in der Seitenrichtung. Es besteht die Möglichkeit die vertikale Dämpfungsebene in Bewegung zu setzen, wobei die Bewegung mit Hilfe des von dem Pilot betätigten Mechanismus oder eines Motors durchgeführt wird. Der guten Ordnung halber soll es bemerkt werden, dass der Leistungsbedarf einer derartigen Bewegung recht gering ist. Die vertikale Dämpfungsebene wird um eine, sich in der vertikalen Symmetrieebene der Flugzeugkonstruktion oder in der damit parallelen Ebene befindende Achse in Bewegung gesetzt, und zwar derweise, dass die vertikale Dämpfungsebene eine Pendelbewegung um die erwähnte Achse ausführe. Durch die beschriebene Bewegung der vertikalen Dämpfungsebene kann eine in die Flugrichtung fallende Luftkraft erzeugt werden, wobei diese Luftkraft den Widerstand gegenüber dem Flug herabsetzend, eigentlich die Gleitzahl der Flugzeugkonstruktion, d. h. die Flugleistung erhöht.

Im Falle der erfindungsgemässen Flugzeugkonstruktion können die horizontale und die vertikale Dämpfungsebene auch separat verwendet werden, aber die Ausführung ist besonders als vorteilhaft betrachtet, bei der sowohl der bewegbare Flügel, wie auch die horizontale Dämpfungsebene und die vertikale Dämpfungsebene vorhanden sind.

Während des Fluges kann der Pilot die bequemste gestreckte Sitzstellung einnehmen, der ihn aufnehmende Pilotraum kann auch teilweise bedeckt sein. Für den Pilot ist es zu ermöglichen, dass der Sitz angeschnallt sei und zwischen den Positionen zwischen dem Abflug und Landung und während des Fluges der Sitz dem Körper des Pilots folge, undzwar derweise, dass er in der Flugposition lösbar befestigt sei. Zu diesem Zwecke wird vorteilhaft eine Sitzkonstruktion ausgestaltet, die am meisten einem Rucksack mit Rohrrahmen ähnlich ist. Diese Sitzkonstruktion muss gegenüber der Aufhängungsstelle hinter dem Pilot verschwenkbar angeschlossen sein, und sollte in der Position des Pilots während des Fluges an der Seite oder am Unterteil des Pilotraums mittels einer lösbaren Verbindung befestigt sein.

Erfindungsgemäss kann bei der Flugzeugkonstruktion die Anwendung eines oder mehrerer akzessorischen strukturellen Elemente in Betracht kommen, die die Sicherheit, eventuell die Bequemlichkeit des Fluges befördern, oder den Abflug oder die Landung erleichtern oder eine höhere Sicherheit anbieten. So z. B. kann ein Rad oder ein elastischer Drehkörper unter dem Pilotraum der Flugzeugkonstruktion angeordnet werden, worauf gegenenfalls die Flugzeugkonstruktion sich herablassen kann, ohne dass der Pilot sich von der Körperposition während des Fluges in die allgemein übliche Landungskörperposition umstellen würde. Ebenfalls kann aus Sicherheitsgründen ein elastischer Körper in den Nasenteil des Flugzeuges eingebaut werden.

Bei der erfindungsgemässen Flugzeugkonstruktion sind der Flügel und die eventuell zur Verwendung kommenden Dämpfungsebenen flexibel ausgestaltet. Das Profil des Flugels - ebenso, wie bei den bekannten, zu dem Drachentyp gehörenden Flugzeugkonstruktionen - wird durch die Luftkräfte ausgestaltet. Es ist wichtig zu bemerken, dass bei den erfindungsgemässen Flugzeugkonstruktionen keine bewegbaren Steuerflächen vorhanden sind. An den Flügeln sind keine Querruder, die Dämpfungsebenen enthalten keine bewegbare Steuerflächen.

Das Wesentliche daher besteht bei einer grundsätzlichen Version der erfindungsgemässen Flugzeugkonstruktion darin, dass das Flugzeug freitragende oder mit äusserer Spreizung versehene, mit dem von dem Pilot betätigten Mechanismus, insbesondere in der eigenen Ebene bewegbare Flügel aufweist.

Das Wesentliche einer anderen grundsätzlichen Ausführungsform besteht darin, dass das Flugzeug freitragende oder mit äusserer Spreizung versehene, mit dem von dem Pilot betätigten Mechanismus, in der eigenen Ebene bewegbare Flügel und vor oder nach dem Pilotraum angeordnete horizontale Dämpfungsebene aufweist.

Das Wesentliche einer weiteren grundsätzlichen Ausführungsform der erfindungsgemässen Flugzeugkonstruktion besteht darin, dass das Flugzeug freitragende oder mit äusserer Spreizung versehene, mit dem von dem Pilot betätigten Mechanismus, insbesondere in der eigenen Ebene bewegbare Flügel und eine vertikale Dämpfungsebene aufweist.

Das der letzteren Ausführung kann eine Lösung abgeleitet werden, deren Wesen darin besteht, dass vor oder nach dem Pilotraum eine horizontale Dämpfungsebene vorgesehen ist, dabei die Konstruktion auch über eine vertikale Dämpfungsebene verfügt.

Bei einer möglichen Ausführung der vorgeschlagenen Lösung kann nur ein Teil je eines Flügels in Bewegung gesetzt werden.

Bei einer weiteren vorteilhaften Ausführung der Erfindung sind die Flügel während eines horizontalen Fluges an einem Zapfen oder einer Achse von im wesentlichen vertikaler Lage verdrehbar gekoppelt.

Bei einer weiteren Ausführung sind die Enden der Flügel gespaltet.

Eine äusserst zweckdienliche Lösung kann dadurch erreicht werden, indem ein an dem Pilot angeschnallter Sitz vorgesehen ist, der während der Verbindung mit der Erde und des Fluges in eine der Körperhaltung des Pilots entsprechende Positur eingestellt und in der letzteren lösbar befestigt werden kann.

Das Wesentliche einer weiteren vorteilhaften Ausführung besteht darin, dass die vertikale Dämpfungsebene der sich in der vertikalen Symmetriebene oder in der damit parallel verlaufenden Ebene der Flugzeugkonstruktion befindenden Achse angeschlossen ist, und ein die vertikale Dämpfungsebene rundum die Achse schwingender Mechanismus vorgesehen ist. Die vertikale Dämpfungsebene kann mit Hilfe des von dem Pilot betätigten Mechanismus in Bewegung gesetzt werden, zu diesem Zwecke kann auch ein Motor verwendet werden.

### Kurze Erleuchterung der Zeichnungen

Die Erfindung wird anhand einiger vorteilhaften Ausführungsbeispiele, mit Hilfe der beiliegenden Zeichnungen näher erläutert; eine als allgemeines Beispiel für die bekannten Flugzeugkonstruktionen des Drachencharakters dienende Lösung wird ebenfalls vorgestellt. Es zeigen

Figur 1 die Vorderansicht eines typischen Beispiels für den bekannten Drachentyp;

Figur 2 die Draufsicht der Flugzeugkonstruktion nach Figur 1;

Figur 3 die Draufsicht eines Ausführungsbeispiels der erfindungsgemässen Flugzeugkonstruktion;

Figur 4 die Seitenansicht der Konstruktion nach Figur 3;

Figur 5 die Vorderansicht der Flugzeugkonstruktion nach Figur 3 und 4;

Figur 6 die Draufsicht einer weiteren möglichen Ausführung der erfindungsgemässen Flugzeugkonstruktion;

Figur 7 die Seitenansicht der Flugzeugkonstruktion nach Figur 6 und

Figur 8 die Vorderansicht der Flügzeugkonstruktion nach Figur 6 und 7.

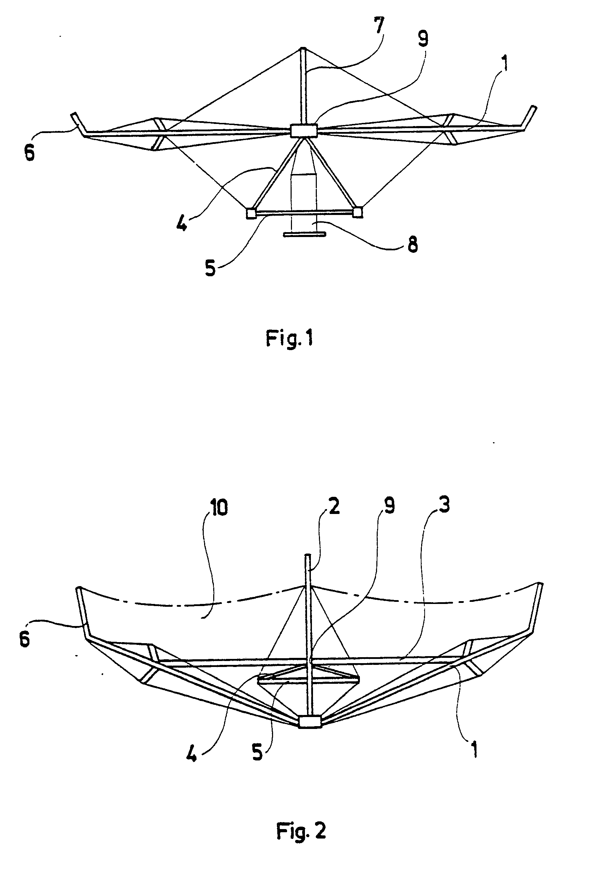

Wie es aus den Figuren 1 und 2 wohl ersichtlich ist, weist die Flugzeugkonstruktion des Drachentyps dessen typischen Ausführungsbeispiel da dargestellt ist - einen äusserst einfachen strukturellen Aufbau auf. Das Gerüst wird eigentlich von vier - im allgemeinen aus Leichtmetall verfertigten - Rohren gebildet; auf diese sind die leinenartigen Stücke aufgespannt, die während des Fluges auf Wirkung der Luftkräfte ein Format aufnehmen, das den einzelnen Teileinheiten der Flugzeugkonstruktion (die man als Flügeleinheiten bezeichnen kann) einen Auftriebskraft hervorrufenden Querschnitt bzw. ein solches Profil leihen. Aus den erwähnten Figuren geht es eindeutig hervor, dass der dem Hauptträger 1 angeschlossene Querträger 2, sowie der Steg 2 quasi die Mittelebene der Flugzeugkonstruktion bestimmen, wobei der Mast 7 gegenüber der vorerwähnten Ebene senkrecht steht. Der Mast 7 mit dem Querträger 3 und dem Steg 2 ist in dem Knotenpunkt 9 zusammengefasst. Bei den Enden des Hauptträgers 1 sind die Flügelendenträger 6 ausgestaltet.

Der erwähnten und beschriebenen Rohrkonstruktion sind verschiedene Versteifungsmittel zugeordnet, diese sind in Figuren 1 und 2 veranschaulicht, eine separate Erläuterung in dieser Hinsicht ist nicht erforderlich. Dem Knotenpunkt 9 schliessen sich der Hängerahmen 4 mit der Steuerstange 5 , und der schaukelartig ausgestaltete Sitz 8 an. Unter dem Überzug 10 wird das leinenartige ausgespannte Element verstanden, das unter der Wirkung der Luftkräfte eine die Auftriebkraft ergebende Form aufnimmt.

Aus der Beschreibung des charakteristischen Ausführungsbeispiels der Flugzeugkonstruktion des Drachentyps geht es eindeutig hervor, dass neben dem äussers einfachen Aufbau die Konstruktion eine recht unbequeme und gegebenenfalls eine bedeutende Belastung mit sich bringende Positur für den Pilot bedingt, dabei ist kein zur Stabilität dienendes Element bei der Konstruktion vorgesehen. Praktische Erfahrungen haben es gezeigt, dass die Gleitzahl der Flugzeugkonstruktion ziemlich ungünstig ist.

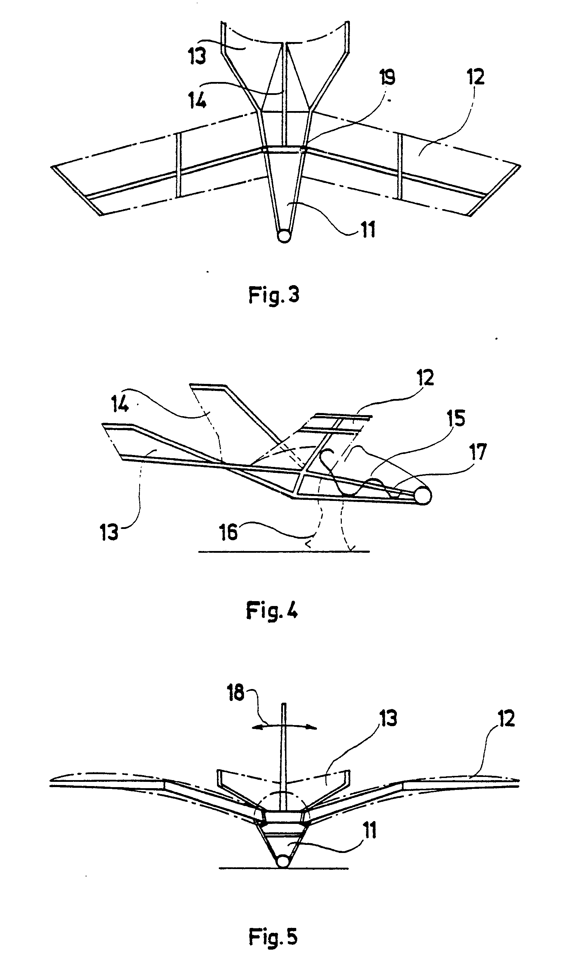

In Figuren 3 bis 5 sind solche Ausführungsformen der erfindungsgemässen Flugzeugkonstruktion dargestellt, die ausser dem bewegbaren Flügel 12 mit einer horizontalen Dämpfungsebene 13 und einer vertikalen Dämpfungsebene 14 versehen sind. Bei dem hier dargestellten Ausführungsbeispiel sind die Flügel 12 freitragend, keine äussere Versteifung ist vorhanden. Mit Hilfe eines zu diesem Zwecke dienenden Mechanismus ist der in dem Pilotraum 11 sitzende Pilot imstande den Flügel 12 in Bewegung zu setzen. Der Mechanismus ist in unseren Figuren nicht dargestellt, da er zum Tätigungskreis des Konstrukteurs gehört und kann nach dem jeweiligen Bedarf zahlreiche Formen aufweisen. Im Sinne der Erfindung kann der Flügel so in Bewegung gesetzt werden, dass dieser sich hauptsächlich in seiner eigenen Ebene bewegt, daneben aber eine Bewegungskomponente anderen Sinnes oder abweichenden Charakters ebenfalls möglich ist, so z. B. eine geringe Verwindung des Flügels 12. Bei der einfachsten Gestaltung - nach Figur 3 gedeutet - scheint es zweckmässig den Flügel 12 um die im wesentlichen auf der Ebene der Zeichnung senkrechte Achse oder den Zapfen 19 Verdrehbar zu montieren. Es ist weiterhin eine Lösung möglich, bei der beide Flügel 12 gleichzeitig bewegt werden, oder es kann ein Mechanismus angewendet werden, der die separate Bewegung je eines Flügels 12 gewährleistet. Eine Konstruktion kann auch ausgestaltet werden, bei der beide Flügel um eine Achse bzw. einen Zapfen 19 verdreht werden können.

Aus den Figuren ist es wohl ersichtlich, dass der Pilot sich während des Abflugs und der Landung in der unter der Benennung "Laufpositur" bekannten Position 16 befindet, während er in der Periode des eigentlichen Fluges die Flugstellung 17 einnimmt. Unter der Flugstellung 17 wird eine gestreckte Sitzposition verstanden, in der der Pilot 15 bequem und mit geringer Kraftentfaltung die die Steuerbewegungen bedeutenden Flügelbewegungen vorzunehmen imstande ist, ohne dass er seine Körperposition zu ändern gezwungen sei.

Der Pilotraum 11 ist teilweise geschlossen, er kann mit einer stromlinienförmigen äusseren Haube versehen werden, eine derartige Gestaltung ist aerodynamisch äusserst vorteilhaft. Bei den hier behandelten Ausführungsbeispiel ist die horizontale Dämpfungsebene hinter dem Pilotraum 11 angeordnet.

Wie wir bereits bei der allgemeinen Beschreibung der erfindungsgemässen Flugzeugkonstruktion erwähnt haben, ist eine Lösung möglich, bei der die vertikale Dämpfungsebene 14 in eine Pendelbewegung gesetzt ist. Bei dem hier behandelten Ausführungsbeispiel findet die Bewegung der vertikalen Dämpfungsebene 14 - Figur 5 zugrunde nehmend - rundum die auf der Zeichnungsebene senkrechte Achse, im Sinne des Pfeils 18 statt.

Die vertikale Dämpfungsebene 14 kann mit der eigenen Muskelkraft des Pilots, unter Zuhilfenahme eines Mechanismus in Bewegung gesetzt werden, die Pendelbewegung der vertikalen Dämpfungsebene kann auch motorisch hervorgerufen werden.

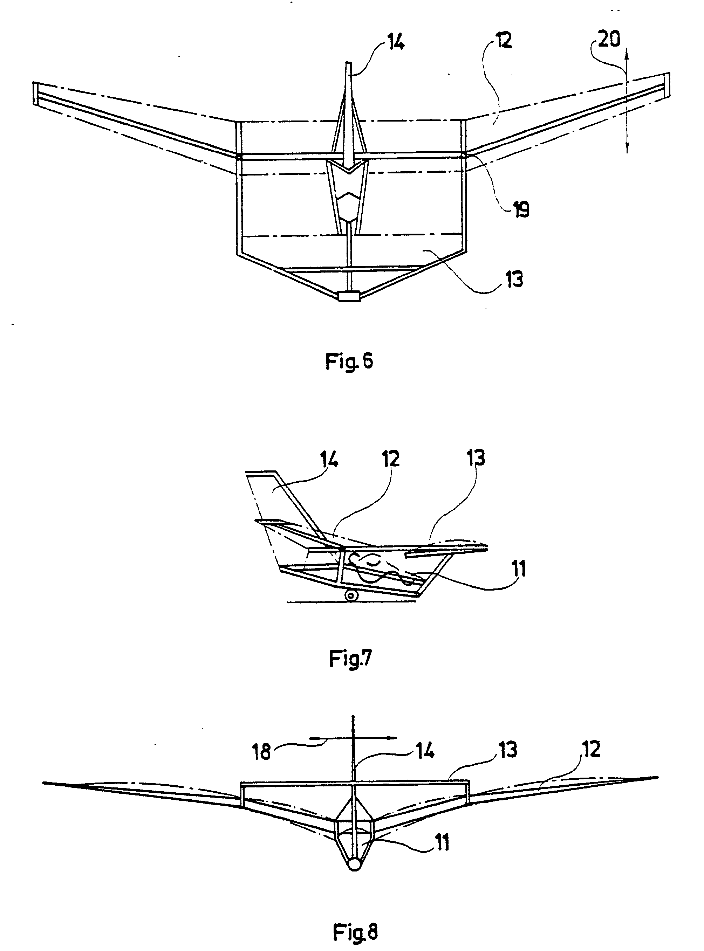

Die Ausführungsform nach Figuren 6 bis 8 weicht insofern von der Ausführung nach Figuren 3 bis 5 ab, indem die horizontale Dämpfungsebene 13 vor dem Pilotraum 11 angeordnet ist und nicht der ganze Flügel 12 in seiner Gesamtheit bewegt wird, sondern nur der Aussenteil der Flügel um den Zapfen 19 - im Sinne des Pfeils 20 - bewegt wird. Im wesentlichen sind die sonstigen Elemente auf die selbe Weise ausgestaltet, wie bei der früher beschriebenen Ausführungsform.

Wie es aus der Figur 7 hervorgeht, ist die Dämpfungsebene 13 so angeordnet bzw. befestigt, dass die freie Aussicht des Pilots 15 nur geringermassen gestört sei.

Bei der Beschreibung der erfindungsgemässen Flugzeugkonstruktion wurden weder dem Gerüst noch das die Auftriebkraft sicherstellende Leinenstück oder sonstige ähnliche Elemente ausführlich beschrieben, da diese ausserhalb des Erfindungskreises liegen und allgemein bekannt sind.

Aus den Figuren 4 und 7 kann es entnommen werden, dass der Unterteil des Pilotraums 11 so ausgestaltet ist, dass der Start und Landung auf Fuss ermöglicht wird. In diesem Sinne ist der Sitz auszustalten, der an dem Pilot angeschnallt ist und der an dem Tragteil - der über dem Kopf des Pilots oder in der Kopfhöhe oder in deren Umgebung angeordnet ist - bewegbar befestigt ist. Die anschnallbare Sitzkonstruktion weist einen Rahmen auf, der jenem der Rucksäcke mit Rohrrahmen ähnlich ist und mit solchen Elementen versehen ist, die in die in dem Pilotraum 11 vorhandenen Gegenstücke eingreifen, wenn der Pilot 15 sich in der Flugstellung 17 befindet. Die erwähnten und ineinander eingreifenden Elemente gewährleisten die feste Stellung des Sitzes. Bei der Landung oder im Falle der Gefahr, wenn der Pilot die Flugstellung 17 zu beseitigen beabsichtigt, kann er mit einer einzigen Bewegung die Befestigung des Sitzes lösen, worauf er in die in den Figuren 4 und 7 dargestellte Laufposition 16 gelangt.

Es soll noch eine weitere vorteilhafte Ausführung der erfindungsgemässen Flugzeugkonstruktion erwähnt werden, bei der unter dem Pilotraum 11 irgendeiner Rollkörper oder ein elastischer Körper angeordnet ist, der die Landung und Start so ermöglicht, dass der Pilot 15 während der Start und Landung die Flugstellung 17 aufrechterhalten kann.

Aus Sicherheitsgründen kann eine Lösung realisiert werden, bei der in dem Nasenteil der Flugzeugkonstruktion ein elastischer Körper, z. B. ein schwammartiger Körper eingesetzt wird.

## Bevorzugte Verwirklichung der Erfindung

Wie es aus der Beschreibung der erfindungsgemässen Flugzeugkonstruktion ersichtlich ist, ist die Flugzeugkonstruktion äusserst einfach aufgebaut, das Gewicht ist gering, in einem zerlegten Zustand kann die Instruktion leicht getragen und z. B. auf den Gepäckhälter eines Kraftfahrzeugs transportiert werden. An der Stelle des Abflugs kann das Flugzeug ohne etwaige Hilfsmittel einfach und schnell zusammengestellt werden. Mit den in die gleiche Kategorie fallenden Flugzeugkonstruktionen verglichen stellen die erwähnten vorteilhaften Eigenschaften zahlreiche Vorteile sowohl in der Hinsicht der Flugsicherheit, wie auch der Flugleistung dar. Über die erwähnten Vorteile bedeutet weder die Steuerung der Flugzeugkonstruktion, noch die Sicherstellung der mit der Lenkung zusammenhängenden Manövrierungen eine besondere physikalische Belastung oder sonstige Inanspruchnahme für den Pilot, so kann er eine längere lang mit der Flugzeugkonstruktion in der Luft verweilen. Es soll noch bemerkt werden, dass die einzelnen Ausführungen der erfindungsgemässen Flugkonstruktion keineswegs anspruchsvoll sind, was die Landungsstellen anbelangt.

## Patentansprüche

1. Flugzeugkonstruktion mit einem vom Piloten (15) betätigbaren, auf die Flügel (12) einwirkenden Mechanismus,
dadurch gekennzeichnet, daß die freitragenden oder mit äußerer Versteifung versehenen Flügel (12) eines Start und Landung unter Zuhilfenahme der Füße des Piloten (15) ermöglichenden Flugzeugs zumindest in der eigenen Ebene bewegbar sind.

2. Flugzeugkonstruktion nach Anspruch 1,
dadurch gekennzeichnet, daß die freitragenden oder mit äußerer Versteifung versehenen Flügel (12) eines Start und Landung unter Zuhilfenahme der Füße des Piloten (15) ermöglichenden Flugzeugs zumindest in der eigenen Ebene bewegbar sind und eine vor oder hinter dem Pilotraum (11) angeordnete horizontale Dämpfungsebene (13) vorgesehen ist.

3. Flugzeugkonstruktion nach Anspruch 1 oder 2,
dadurch gekennzeichnet, daß die freitragenden oder mit äußerer Versteifung versehenen Flügel (12) eines Start und Landung unter Zuhilfenahme der Füße des Piloten (15) ermöglichenden Flugzeugs zumindest in der eigenen Ebene bewegbar sind und eine vertikale Dämpfungsebene (14) vorgesehen ist.

4. Flugzeugkonstruktion nach Anspruch 3,
dadurch gekennzeichnet, daß vor oder hinter dem Pilotraum (12) eine horizontale Dämpfungsebene (13) vorgesehen ist.

5. Flugzeugkonstruktion nach einem der Ansprüche 1 bis 4,
dadurch gekennzeichnet, daß nur ein Teil der einzelnen Flügel (12) bewegbar ist.

6. Flugzeugkonstruktion nach einem der Ansprüche 1 bis 5,
dadurch gekennzeichnet, daß die Flügel (12) bzw. Flügelteile an einer bei horizontalem Flug im wesentlichen vertikalen Achse oder Zapfen (19) angelenkt sind.

7. Flugzeugkonstruktion nach einem der Ansprüche 1 bis 6,
dadurch gekennzeichnet, daß die Enden der Flügel (12) ständig gespalten sind.

8. Flugzeugkonstruktion nach einem der Ansprüche 1 bis 7,
dadurch gekennzeichnet, daß ein am Piloten anschnallbarer Sitz vorgesehen ist, der zum Bodenkontakt und zum Flug in eine der jeweiligen Körperhaltung des Piloten (15) ensprechende Position einstellbar und in der letzteren lösbar befestigbar ist.

9. Flugzeugkonstruktion nach einem der Ansprüche 3 bis 8,
dadurch gekennzeichnet, daß die vertikale Dämpfungsebene (14) sich an eine in der vertikalen Symmetrieebene der Flugzeugkonstruktion oder in einer dazu parallelen Ebene liegende Achse anschliesst und ein die vertikale Dämpfungsebene (14) in eine Schwingungsbewegung um diese Achse setzender Mechanismus vorgesehen ist.

10. Flugzeugkonstruktion nach Anspruch 9,
dadurch gekennzeichnet, daß ein zur Bewegung der vertikalen Dämpfungsebene (14) dienender Motor vorgesehen ist.

**Claims**

1. Aircraft structure having a mechanism which can be actuated by the pilot (15) and which acts upon the wings (12), characterised in that the wings (12), which are cantilevered or provided with outer stiffening, of an aircraft, which allows take-off and landing with the aid of the feet of the pilot (15), are movable at least in their own plane.

2. Aircraft structure according to claim 1, characterised in that the wings (12), which are cantilevered or provided with outer stiffening, of an aircraft, which allows take-off and landing with the aid of the feet of the pilot (15), are movable at least in their own plane and a horizontal stabilizing plane (13) is provided, arranged in front of or behind the pilot's compartment (11).

3. Aircraft structure according to claim 1 or 2, characterised in that the wings (12), which are cantilevered or provided with outer stiffening, of an aircraft, which allows take-off and landing with the aid of the feet of the pilot (15), are movable at least in their own plane and a vertical stabilizing plane (14) is provided.

4. Aircraft structure according to claim 3, characterised in that a horizontal stabilizing plane (13) is provided in front of or behind the pilot's compartment (11).

5. Aircraft structure according to one of the claims 1 to 4, characterised in that only one part of the individual wings (12) is movable.

6. Aircraft structure according to one of the claims 1 to 5, characterized in that the wings (12) or parts of the wings are articulated on a shaft or pivot (19) which is substantially vertical when in horizontal flight.

7. Aircraft structure according to one of the claims 1 to 6, characterised in that the ends of the wings (12) are permanently split.

8. Aircraft structure according to one of the claims 1 to 7, characterised in that a seat is provided, which seat can be strapped onto the pilot and can be adjusted, for ground contact and for flight, into a position corresponding to the respective body attitude of the pilot (15) and can be secured releasably in the latter.

9. Aircraft structure according to one of the claims 3 to 8, characterised in that the vertical stabilizing plane (14) is connected to a shaft lying in the vertical plane of symmetry of the aircraft structure or in a plane parallel thereto and there is provided a mechanism which sets the vertical stabilizing plane (14) into a motion of swing about this shaft.

10. Aircraft structure according to claim 9, characterised in that there is provided a motor which serves to move the vertical stabilizing plane (14).

**Revendications**

1. Structure d'avion comprenant un mécanisme pouvant être manoeuvré par le pilote (15) et agissant sur les ailes (12), caractérisée en ce que les ailes (12) autoportantes ou munies d'un renforcement extérieur, d'un avion permettant un décollage et un atterrissage à l'aide des pieds du pilote (15), peuvent être déplacées au moins dans le plan propre.

2. Structure d'avion selon la revendication 1, caractérisée en ce que les ailes (12) autoportantes ou munies d'un renforcement extérieur, d'un avion permettant un décollage et un atterrissage à l'aide des pieds du pilote (15), peuvent être déplacées au moins dans le plan propre et en ce qu'un plan horizontal d'amortissement (13) est prévu devant ou derrière l'espace de pilotage (11).

3. Structure d'avion selon la revendication 1 ou 2, caractérisée en ce que les ailes (12) autoportantes ou munies d'un renforcement extérieur, d'un avion permettant un décollage et un atterrissage à l'aide des pieds du pilote (15), peuvent être déplacées au moins dans le plan propre et en ce qu'un plan vertical d'amortissement (14) est prévu.

4. Structure d'avion selon la revendication 3, caractérisée en ce qu'un plan horizontal d'amortissement (13) est prévu devant ou derrière l'espace de pilotage (11).

5. Structure d'avion selon l'une des revendications 1 à 4, caractérisée en ce qu'une partie seulement des différentes ailes (12) peut être déplacée.

6. Structure d'avion selon l'une des revendications 1 à 5, caractérisée en ce que les ailes (12) ou parties d'ailes sont articulées sur un axe ou pivot (19) qui est pour l'essentiel vertical lors du vol horizontal.

7. Structure d'avion selon l'une des revendications 1 à 6, caractérisée en ce que les extrémités des ailes (12) sont constamment fendues.

8. Structure d'avion selon l'une des revendications 1 à 7, caractérisée en ce qu'il est prévu un siège qui peut être attaché au pilote, peut être réglé pour le contact avec le sol et le vol dans une position correspondant à celle du corps du pilote (15) et être fixé de façon amovible dans cette dernière.

9. Structure d'avion selon l'une des revendications 3 à 8, caractérisée en ce que le plan vertical d'amortissement (14) se raccorde à un axe se trouvant dans le plan de symétrie vertical de la structure d'avion ou dans un plan parallèle audit plan de symétrie et en ce qu'il est prévu un mécanisme faisant effectuer au plan vertical d'amortissement (14) un mouvement oscillatoire autour de cet axe.

10. Structure d'avion selon la revendication 9, caractérisée en ce qu il est prévu un moteur servant à mouvoir le plan vertical d'amortissement (14).

Fig. 1

Fig. 2

Fig. 3

Fig. 4

Fig. 5

Fig. 6

Fig. 7

Fig. 8